# FASCICULE DE BREVET EUROPEEN

(11) **EP 0 657 366 B1**
(45) Date de publication et mention de la délivrance du brevet: **27.08.1997**
(21) Numéro de dépôt: 94420346.2
(22) Date de dépôt: 07.12.1994
(51) Int. Cl.: B65D 77/20, B65D 43/06

(54) **Fermeture étanche d'un récipient en plastique avec un couvercle en plastique, pelable et réutilisable**
Dichtungsverschluss für einen Kunststoffbehälter mit einem aufreissbaren und wiederverschliessbaren Deckel
Sealing closure for a plastic container having a peelable and reclosable lid

(30) Priorité: 09.12.1993 FR 9315033
(43) Date de publication de la demande: 14.06.1995
(73) Titulaire: PECHINEY EMBALLAGE ALIMENTAIRE, 92115 Clichy (FR)
(72) Inventeur: Philippe, Michel, F-38200 Vienne (FR); Rea, Jean, F-69230 Saint Genis Laval (FR)
(74) Mandataire: Pigasse, Daniel

(56) Documents cités:
- EP-A- 0 338 488
- EP-A- 0 405 365
- EP-A- 0 435 638
- DE-A- 3 626 923
- GB-A- 2 161 782

## Description

L'invention concerne une liaison étanche entre un récipient non métallique et un couvercle non métallique, pelable et réutilisable.

Dans sa demande de brevet français FR-A-2 692 224 publiée le 17/12/93, la demanderesse revendique un procédé de liaison, au moyen d'ultrasons, entre un récipient non métallique et un couvercle non métallique, pelable et réutilisable.

On connait aussi le brevet GB-A-2 161 782 qui décrit un couvercle en PP, lié de manière étanche et pelable à un récipient en matériaux non-métalliques, le récipient comportant un relief ou jonc circulaire de forme convexe sur le rebord de scellement.

Le préambule de la revendication 1 est basé sur cet état de la technique.

Cependant, la demanderesse a constaté que pour les récipients de grand diamètre (soit supérieur à 100 mm env.) il était difficile de concilier les contraintes de fabrication et les exigences de qualité du produit fini.

Pour des récipients de grand diamètre, plus épais, car devant résister à une charge verticale donnée, le scellage exige des temps plus longs, d'où un ralentissement de la productivité. Par ailleurs, ces couvercles plus épais et/ou plus grands exigent des efforts de traction trop importants pour une ouverture manuelle lors de la première ouverture.

Dans la suite du texte, PP désignera le polypropylène, PE le polyéthylène et PEBD le polyéthylène basse densité.

Il a été en effet déterminé expérimentalement que pour un scellage PP sur PP et une géométrie donnée, l'effort d'ouverture varie sensiblement comme √R, R étant le rayon hors-tout du récipient; pour des récipients de diamètres 95, 116 et 146 mm, ceci conduit respectivement à une augmentation relative des efforts de 10 ou 24% par rapport au récipient de 95 mm.

Le problème à résoudre est donc l'obtention d'une liaison entre récipient et couvercle non métalliques, de grandes dimensions, ayant les mêmes caractéristiques d'utilisation et/ou exigences de fabrication que les récipients plus petits de Ø < 95 mm, à savoir :
- une force de première ouverture du couvercle ≤ 30N, aussi régulière que possible
- une résistance à une pression interne ≥ 50 mbar (5 kPa)
- un temps de scellage (par ultrasons) < 1 sec,
le joint obtenu étant parfaitement étanche et le récipient rebouchable après une ou plusieurs utilisations successives.

Pour résoudre ce problème, la demanderesse a trouvé que, le couvercle étant classiquement en PP :
- le récipient devait être en un matériau non métallique, bi-couche, la couche externe étant du PP et la couche interne un alliage PP-PE contenant de 30 à 70 % de PE, l'épaisseur relative de cette couche étant comprise entre 5 et 30% par rapport à l'épaisseur totale du matériau. En dessous de 30% de PE, l'adhérence est trop importante; au-dessus de 70% de PE, l'adhérence est insuffisante. Si la couche interne n'est pas assez épaisse, le fluage est immédiat et l'adhérence trop importante; si la couche interne est trop épaisse, la résistance du récipient à l'écrasement est insuffisante.
   L'épaisseur de la couche interne doit cependant être d'au moins 0,1 mm. De plus, il est préférable que dans l'alliage PP + PE constituant la couche interne, le PE utilisé soit un PEBD (linéaire ou radiculaire) et que son grade soit compris entre 2 et 30, grade déterminé suivant la norme ASTM D1228/L et exprimé en dg/min à 190°C sous 21,6 N,
- le rebord dudit récipient devait présenter un relief ou jonc circulaire de forme convexe dont la hauteur H par rapport à la face supérieure interne du rebord du récipient est comprise entre 0,1 et 0,8 mm et dont la base B au niveau de la face supérieure interne du rebord du récipient est comprise entre 0,5 et 2 mm. La section de ce jonc peut varier, par exemple, de la forme rectangulaire au ½ cercle en passant par une forme trapézoïdale.

Etant donné sa nature et son épaisseur, la couche interne du récipient étant plus fusible que sa couche externe et que celle du couvercle, il en résulte que lors du scellage, ladite couche fond et flue au droit du jonc, les 2 couches de PP du récipient et du couvercle venant alors en contact et le scellage obtenu étant étanche. Il est à remarquer que le couvercle n'est nullement altéré lors de cette opération; il conserve pratiquement son épaisseur, ce qui évite toute déchirure locale lors de l'ouverture.

Ainsi, l'objet de l'invention est un emballage étanche selon la revendication 1.

Outre son rôle de liaison lors du scellage, le jonc offre les avantages suivants :
- il permet de corriger les petites erreurs géométriques dues au thermoforrmage du récipient,
- il permet de concentrer l'énergie sur une plus petite surface de liaison, et donc de diminuer les temps de scellage
- il permet de régler plus facilement l'effort à appliquer lors du scellage.

Il a été remarqué que pour éviter des soudages accidentels et parasites de la jupe du couvercle sur le corps du récipient, il est préférable que celle-ci comporte au moins 3 plots de centrage, constitués par exemple par des dépressions de la paroi formant des protubérances internes.

Nous rappelons que l'outillage de scellage comporte essentiellement une enclume annulaire placée sous le rebord du couvercle et une tête de pression (ou sonotrode) reliée à un générateur d'ultrasons entre lesquels sont situés le récipient et le couvercle à sceller.

En ce qui concerne l'outillage, il a été constaté que si l'enclume qui supporte le rebord du récipient est munie d'une contre-pente de 5 à 15° par rapport à l'horizontale située sensiblement à la verticale du centre du jonc, il en résulte un auto-centrage du récipient en cours de scellage. Cette contre-pente peut être dirigée indifféremment vers l'intérieur ou vers l'extérieur du récipient.

L'invention sera mieux comprise à l'aide de l'exemple suivant illustré par les fig. 1 à 4.

La figure 1 donne le profil et les cotes principales (en mm) d'un récipient Ø 116 et du couvercle correspondant.
La figure 2 représente une vue en coupe d'un rebord du récipient Ø 116 mm en PP comportant une couche de PP à 50% PE avant scellage.
La figure 3 représente une vue en coupe de la liaison après scellage.
La figure 4 représente une coupe axiale de l'enclume 10 permettant l'auto-centrage du récipient lors du scellage aux ultrasons.

### EXEMPLE 1

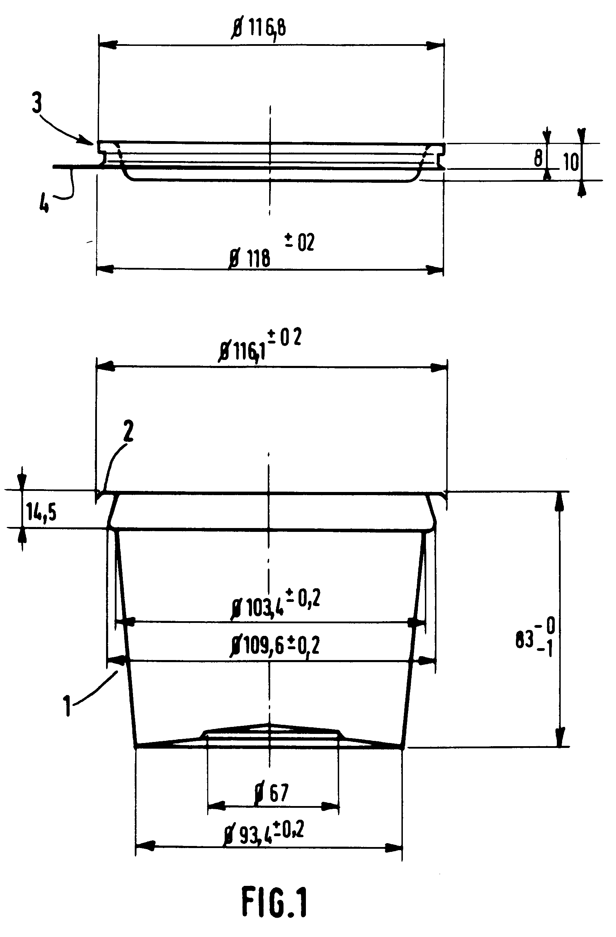

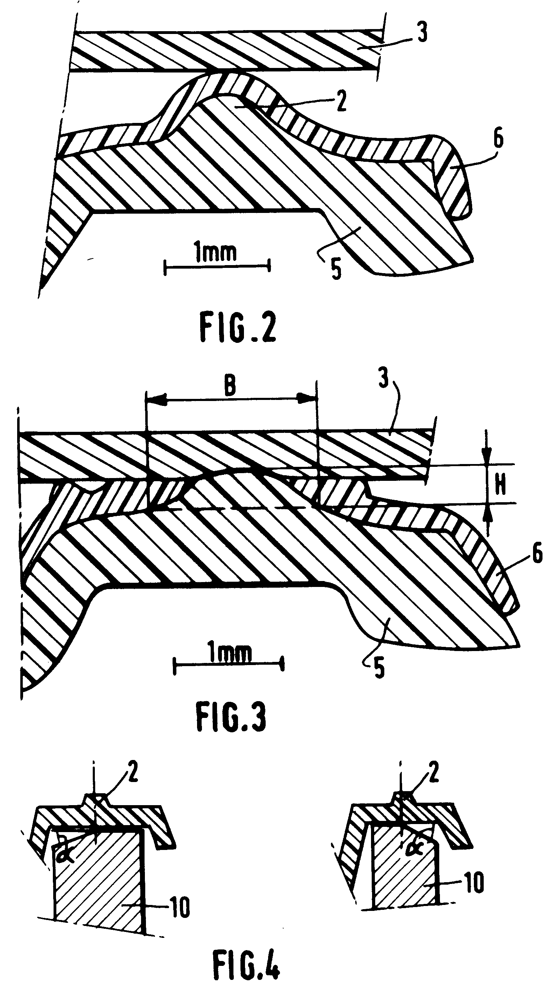

Un récipient 1 conforme à la figure 1 (cotes en mm) a été réalisé à partir d'une bande constituée d'une couche externe 5 en PP ( T31 SE de la Sté Himont) de 1,2 mm d'épaisseur et d'une couche interne 6 en alliage de PP (ci-dessus) et de PE (MR 10 de la sté Enichem) à raison de 50% chacun et de 0,3 mm d'épaisseur.
Le couvercle 3 muni de sa languette de pelage 4 est en PP de même nature que la couche externe du récipient.
Le rebord du récipient présente un jonc 2 dont la géométrie est reportée à la figure 2.

Après scellage sous ultrasons, dans les conditions suivantes :
- effort statique sur la sonotrode: de 1272 N
- temps des ultrasons: 0,5 sec.
la force de pelage est égale à 30N et la résistance à la pression interne est égale à 70 mbar (7 kPa), le joint obtenu étant parfaitement étanche avant ouverture et le couvercle réutilisable (voir fig.3).
La force de pelage est mesurée comme effort maximum de traction à exercer verticalement sur la languette pour ouvrir le récipient.
La pression interne a été mesurée en mettant sous pression l'objet immergé dans l'eau et en relevant la pression au manomètre à l'apparition de la première bulle.

### EXEMPLE 2

Un récipient analogue à celui de l'Exemple 1 a été testé, la seule différence étant que la couche interne 6 comporte 60% de PE, 40% de PP.
Après scellage sous ultrasons, sous une charge de 2125N pendant 0,4 sec, la force de pelage est égale à 28 N et la résistance à la pression interne de 80 mbar (8 kPa).

Cette invention trouve son application dans le domaine de l'emballage, en particulier de produits laitiers frais.

## Revendications

1. Emballage étanche formé par un récipient (1) en matériau non métallique et un couvercle (3) pelable en PP, ledit récipient (1) comportant au niveau du rebord de scellage un relief ou jonc circulaire (2) de forme convexe, caractérisé en ce que ledit récipient (1) est en matériau bicouche (5,6), la couche externe (5) étant en PP, et la couche interne (6) en alliage PP-PE contenant de 30 à 70% de PE, de manière à ce que, lors du scellage étanche du récipient (1) et du couvercle (3), ladite couche interne (6), étant plus flexible que ladite couche externe (5) et que la couche du couvercle (3), fond et flue au droit du jonc (2), ladite couche externe en PP venant alors en contact avec la couche du couvercle en PP et formant un scellage étanche.

2. Emballage selon la revendication 1 caractérisé en ce que l'épaisseur de la couche interne (6) représente de 5 à 30% de l'épaisseur totale du matériau bi-couche (5,6).

3. Emballage selon l'une des revendications 1 ou 2 caractérisé en ce que la largeur H du jonc (2) est comprise entre 0,1 et 0,8 mm.

4. Emballage selon l'une des revendications 1 à 3 caractérisée en ce que la largeur B de la base du jonc (2) est comprise entre 0,5 et 2 mm.

5. Emballage selon l'une des revendications 1 à 4 caractérisé en ce que le PE utilisé pour la constitution de la couche interne (6) est un PEBD linéaire ou radiculaire.

6. Emballage selon la revendication 5 caractérisé en ce que le grade du PEBD est compris entre 2 et 30 en dg/min à 190°C sous 21,6 N, déterminé suivant la norme ASTM D1228/L.

7. Emballage selon l'une des revendications 1 à 6 dans lequel ledit couvercle comporte au moins 3 plots de centrage.

## Claims

1. Tight packaging formed by a container (1) of non-metallic material and a peelable lid (3) of PP, said container (1) comprising a circular relief or bead (2) of convex shape in the region of the sealing rim, characterised in that said container (1) is of two-layered material (5, 6), the external layer (5) being of PP and the internal layer (6) of PP-PE alloy containing from 30 to 70% of PE so, during the tight sealing of the container (1) and of the lid (3), said internal layer (6) which is more flexible than said external layer and the layer of the lid (3) melts and yields in line with the bead (2), said external layer of PP therefore coming into contact with the layer of the lid made of PP and forming a tight seal.

2. Packaging according to claim 1, characterised in that the thickness of the internal layer (6) represents from 5 to 30% of the total thickness of the two-layered material (5, 6).

3. Packaging according to one of claims 1 or 2, characterised in that the width H of the bead (2) is between 0.1 and 0.8 mm.

4. Packaging according to one of claims 1 to 3, characterised in that the width B of the base of the bead (2) is between 0.5 and 2 mm.

5. Packaging according to one of claims 1 to 4, characterised in that the PE used for making up the internal layer (6) is a linear or radical-like LDPE.

6. Packaging according to claim 5, characterised in that the grade of the LDPE is between 2 and 30 in dg/min at 190°C under 21.6 N, determined according to ASTM standard D1228/L.

7. Packaging according to one of claims 1 to 6, in which said lid comprises at least three centring studs.

## Patentansprüche

1. Dichte Verpackung, bestehend aus einem Behälter (1) aus nichtmetallischem Werkstoff und einem aufreißbaren Deckel (3) aus PP, wobei der Behälter (1) im Bereich der Siegelkante einen kreisförmigen Vorsprung oder Wulst (2) konvexer Form aufweist, dadurch gekennzeichnet, daß der Behälter (1) aus einem zweischichtigen Werkstoff (5, 6) besteht, wobei die Außenschicht (5) aus PP ist und die Innenschicht (6) aus einer PP/PE-Legierung mit einem PE-Gehalt von 30 bis 70 %, so daß beim dichten Siegeln des Behälters (1) und des Deckels (3) die Innenschicht (6), die leichter schmilzt als die Außenschicht (5) und die Schicht des Deckels (3), gerade gegenüber dem Wulst (2) schmilzt und fließt, wobei die Außenschicht aus PP mit der Schicht des Deckels aus PP in Kontakt kommt und eine dichten Siegelverbindung bildet.

2. Verpackung nach Anspruch 1, dadurch gekennzeichnet, daß die Dicke der Innenschicht (6) 5 bis 30 % der Gesamtdicke des zweischichtigen Werkstoffs (5, 6) beträgt.

3. Verpackung nach Anspruch 1 oder 2, dadurch gekennzeichnet, daß die Höhe H des Wulstes (2) 0,1 bis 0,8 mm beträgt.

4. Verpackung nach einem der Ansprüche 1 bis 3, dadurch gekennzeichnet, daß die Breite B der Basis des Wulstes (2) 0,5 bis 2 mm beträgt.

5. Verpackung nach einem der Ansprüche 1 bis 4, dadurch gekennzeichnet, daß das PE, das für die Bildung der Innenschicht (6) verwendet wird, ein lineares oder vernetztes LDPE ist.

6. Verpackung nach Anspruch 5, dadurch gekennzeichnet, daß der Plastizitätsgrad des LDPE, bestimmt nach der Norm ASTM D1228/L bei 190°C und 21,6 N, 2 bis 30 dg/min beträgt.

7. Verpackung nach einem der Ansprüche 1 bis 6, dadurch gekennzeichnet, daß der Deckel mindestens drei Zentriervorsprünge aufweist.
